(19) Europäisches Patentamt
European Patent Office
Office européen des brevets

(11) Veröffentlichungsnummer: **0 156 275**
**B1**

(12) # EUROPÄISCHE PATENTSCHRIFT

(45) Veröffentlichungstag der Patentschrift: **07.06.89**

(51) Int. Cl.⁴: **C 07 C103/50**, A 01 N 37/20

(21) Anmeldenummer: **85103085.8**

(22) Anmeldetag: **16.03.85**

(54) **Antimikrobiell wirksame Substanzen, ihre Herstellung und ihre Verwendung.**

(30) Priorität: **24.03.84 DE 3410956**

(43) Veröffentlichungstag der Anmeldung: **02.10.85 Patentblatt 85/40**

(45) Bekanntmachung des Hinweises auf die Patenterteilung: **07.06.89 Patentblatt 89/23**

(84) Benannte Vertragsstaaten: **AT BE CH DE FR GB IT LI LU NL SE**

(56) Entgegenhaltungen:
**EP-A- 0 005 806**
**US-A- 4 207 079**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Gerhardt, Werner, Dr.**
**Noldeweg 10**
**D-4010 Hilden (DE)**
Erfinder: **Fischer, Herbert, Dr.**
**Am Nettchesfeld 14**
**D-4000 Düsseldorf (DE)**
Erfinder: **Lehmann, Rudolf, Dr.**
**Schnugsheide 18**
**D-5653 Leichlingen 1 (DE)**
Erfinder: **Disch, Karlheinz, Dr.**
**Holbeinstrasse 10**
**D-5657 Haan (DE)**
Erfinder: **Leinen, Hans Theo, Dr.**
**Monheimsallee 19**
**D-5100 Aachen (DE)**

**EP 0 156 275 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der EP-A-0 005 806 ist die Verwendung von Aminohydroxystearinsäureamiden der Formel I

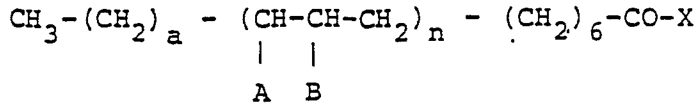 (I)

in der die Kombination n = 1 und a = 7, oder n = 2 und a = 4, oder n = 3 und a = 1 gelten und von den Substituenten A und B jeweils einer eine Hydroxylgruppe bedeutet, während der verbleibende Substituent B oder A und der Substituent X einen Rest der Formel II darstellt,

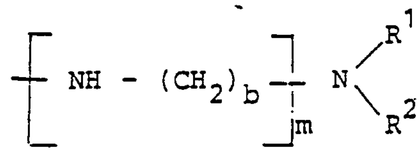 (II)

in der b ganze Zahlen von 2 bis 6, m 1 oder 2, $R^1$ und $R^2$ unabhängig voneinander Wasserstoff oder einen Alkylrest mit 1 bis 12 Kohlenstoffatomen bedeuten, als antimikrobielle Wirkstoffe bekannt.

Die Erfindung betrifft antimikrobiell wirksame Substanzen, die erhältlich sind durch

1) Umsetzung von

a) N-substituierten Propylendiaminen der Formel I,

$$R^1—NH—CH_2—CH_2—CH_2—NH_2 \quad (I)$$

in der $R^1$ für einen linearen Alkylrest mit 12 bis 14 Kohlenstoffatomen steht, mit

b) Verbindungen der Formel II,

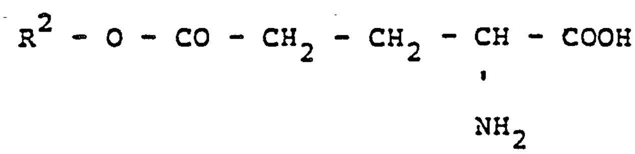 (II)

in der $R^2$ einen Alkylrest mit 1 bis 4 Kohlenstoffatomen oder ein Wasserstoffatom bedeutet, wobei das molare Verhältnis der Reaktionspartner a : b 1 : 1 bis 1 : 2 beträgt und die Reaktion unter Austritt von Alkohol und/oder Wasser im Verlauf von 0,5 bis 10 Stunden bei 60 bis 175 °C durchgeführt wird, und gegebenenfalls

2) weitere Umsetzung der nach 1) erhaltenen Produkte mit Ethylenoxid oder Propylenoxid unter an sich bekannten Alkoxylierungsbedingungen, sowie gegebenenfalls

3) Salzbildung der nach 1) oder 2) erhaltenen Produkte mit anorganischen oder organischen Säuren.

Die Erfindung betrifft weiterhin ein Verfahren zur Herstellung von antimikrobiell wirksamen Substanzen, bei dem man

1) a) N-substituierte Propylendiamine der Formel I,

$$R^1—NH—CH_2—CH_2—CH_2—NH_2 \quad (I)$$

in der $R^1$ für einen linearen Alkylrest mit 12 bis 14 Kohlenstoffatomen steht, mit

b) Verbindungen der Formel II umsetzt,

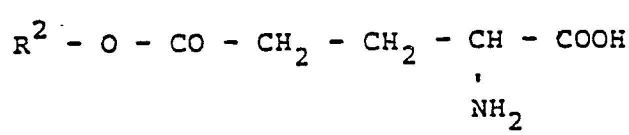 (II)

in der $R^2$ einen Alkylrest mit 1 bis 4 Kohlenstoffatomen oder ein Wasserstoffatom bedeutet, wobei das molare Verhältnis der Reaktionspartner a : b 1 : 1 bis 1 : 2 beträgt und die Reaktion unter Austritt von

Alkohol und/oder Wasser im Verlauf von 0,5 bis 10 Stunden bei 60 bis 175 °C durchgeführt wird, und gegebenenfalls

2) die nach 1) erhaltenen Produkte mit Ethylenoxid oder Propylenoxid unter an sich bekannten Alkoxylierungsbedingungen umsetzt, sowie gegebenenfalls

3) die nach 1) oder 2) erhaltenen Produkte mit anorganischen oder organischen Säuren zu den entsprechenden Salzen umsetzt.

Die Erfindung betrifft schließlich die Verwendung der vorstehend definierten Substanzen als antimikrobielle Wirkstoffe.

Bei den als Ausgangsmaterial für die Herstellung der erfindungsgemäßen Substanzen verwendeten Verbindungen der Formel I handelt es sich um N-n-Dodecyl- und N-n-Tetradecylpropylendiamin bekannte Produkte, die nach gängigen Methoden der organischen Synthese erhalten werden können, beispielsweise durch Umsetzung der entsprechenden Alkylamine mit Acrylnitril und nachfolgende Hydrierung (Houben-Weyl, Methoden der organischen Chemie, 4. Auflage, Band 11/1, Seite 564 ; FR-PS 1 351 793). Die Diamine der Formel I können als chemische Individuen und als Gemische eingesetzt werden. Besonders bevorzugt sind hier Gemische der beiden Diamine, in denen der Anteil des N-n-Dodecylpropylendiamins 65-75 Molprozent ausmacht.

Bei den ferner als Ausgangsmaterial für die Herstellung der erfindungsgemäßen Substanzen benötigten Verbindungen der Formel II handelt es sich um Glutaminsäure und um Glutaminsäure-5-ester, die ebenfalls literaturbekannte Produkte darstellen. Die freie Glutaminsäure und die Glutaminsäurekomponente der Ester können in der L-Form, in der D-Form und in der razemischen Form vorliegen, wobei in beiden Fällen die L-Form die bevorzugte ist. Die Alkoholkomponente der Glutaminsäure-5-ester kann aus aliphatischen Alkoholen mit 1 bis 4 Kohlenstoffatomen, beispielsweise aus Ethanol, n-Propanol, n-Butanol und besonders bevorzugt aus Methanol bestehen. Verfahren zur Herstellung von Glutaminsäure-5-estern sind in DE-AS 2 158 562, DE-OS 1 493 991 und DE-AS 1 254 635 beschrieben.

Geht man bei der Herstellung der erfindungsgemäßen Substanzen von freier Glutaminsäure aus, so kann man die Reaktionspartner in Substanz, d. h. in Abwesenheit von Lösungsmitteln, aufeinander einwirken lassen und das dabei entstehende Wasser abdestillieren. Es hat sich jedoch als zweckmäßig erwiesen, die Reaktion in einem geeigneten organischen Lösungsmittel durchzuführen. In dem zur Verwendung vorgesehenen Lösungsmittel müssen die Reaktionspartner hinreichend löslich sein. Gleichzeitig muß das Lösungsmittel in der Lage sein, gegenüber dem aus dem Reaktionsgemisch zu entfernenden Wasser als Schleppmittel zu fungieren. Als geeignete Lösungs- und Schleppmittel haben sich geradkettige und verzweigte aliphatische Alkohole mit 4 bis 6 Kohlenstoffatomen, beispielsweise i-Amylalkohol, und Toluol erwiesen. In dieser Verfahrensvariante wird das Gemisch aus N-Alkylpropylendiamin, Glutaminsäure und Lösungsmittel zumindest solange am Wasserabscheider zum Rückflußkochen erhitzt, bis sich die für die Amidbildung berechnete Menge Wasser abgeschieden hat. Wenn die Wasserabspaltung das vorgesehene Ausmaß erreicht hat, wird das Lösungsmittel zweckmäßigerweise unter vermindertem Druck aus dem Reaktionsgemisch abdestilliert. Die nach dem Abdestillieren des Lösungsmittels als Rückstand verbleibenden Umsetzungsprodukte aus 1 bis 2 Mol Glutaminsäure und 1 Mol N-Alkylpropylendiaminen können ohne weitere Reinigung direkt ihrer Verwendung als antimikrobielle Wirkstoffe zugeführt werden oder als Ausgangsmaterial für die Herstellung der ebenfalls erfindungsgemäßen Ethylenoxid- oder Propylenoxid-Anlagerungsprodukte und Salze von anorganischen und organischen Säuren eingesetzt werden.

Wenn man bei der Herstellung der erfindungsgemäßen Substanzen von Glutaminsäure-5-estern und N-Alkyl-propylendiaminen ausgeht, erhitzt man die Reaktionspartner zweckmäßigerweise in Abwesenheit von Lösungsmitteln solange auf Temperaturen bis zu 175 °C, bis die für die Amidbildung berechnete Menge Alkohol überdestilliert ist. Die gewünschten Umsetzungsprodukte werden auf diesem Wege direkt erhalten ; sie können ohne weitere Reinigung als antimikrobielle Wirkstoffe oder als Ausgangsmaterial für die Herstellung von Salzen oder Alkylenoxidanlagerungsprodukten verwendet werden.

Bei der Herstellung der erfindungsgemäßen Substanzen aus N-Alkylpropylendiaminen und Glutaminsäure werden auch dann Produkte mit hoher antimikrobieller Wirksamkeit erhalten, wenn die Wasserabspaltung wesentlich über die für die Carbonsäureamidbildung berechnete Menge hinausgeht. Das zusätzlich entstehende Wasser stammt offensichtlich aus inter- oder intramolekularen Reaktionen, deren Natur derzeit nicht bekannt ist. Vergleichbare Produkte werden auch erhalten, wenn man bei der Umsetzung von Glutaminsäure-5-estern mit den N-Alkylpropylendiaminen die bei der Alkoholabspaltung erhaltenen Produkte auf Temperaturen von 100 bis 175 °C erhitzt. Längeres Erhitzen auf Temperaturen über 175 °C führt zu Produkten mit verschlechterten anwendungstechnischen Eigenschaften.

Die Reaktion der oben beschriebenen Umsetzungsprodukte von N-substituierten Propylendiaminen der Formel I mit den Verbindungen der Formel II mit Ethylenoxid oder Propylenoxid erfolgt in an sich bekannter Weise bei 50 bis 150 °C. Für die rationelle Herstellung der Alkylenoxidanlagerungsprodukte hat es sich als zweckmäßig erwiesen, die Additionsreaktion gleich im Anschluß an die Herstellung der Umsetzungsprodukte aus N-Alkylpropylendiamin und Glutaminsäure bzw. Glutaminsäureester durchzuführen. Das Mengenverhältnis der Reaktionspartner wird dabei so gewählt, daß das Molverhältnis des dem Umsetzungsprodukt zugrundeliegenden N-substituierten Propylendiamines zum Ethylenoxid oder Propylenoxid 1 : 1 bis 1 : 10, vorzugsweise 1 : 1, beträgt. Die aus der Alkoxylierung resultierenden

Produkte können ohne weitere Reinigung als antimikrobielle Wirkstoffe oder als Ausgangsmaterial für die Herstellung von Salzen mit anorganischen oder organischen Säuren eingesetzt werden.

Die nach 1) und 2) erhaltenen Substanzen können mit anorganischen und organischen Säuren zu den entsprechenden Salzen umgesetzt werden. Geeignete Säuren sind beispielsweise: Salzsäure, Schwefelsäure, Phosphorsäure, Ameisensäure, Essigsäure, Milchsäure, Weinsäure, Zitronensäure und Benzoesäure. Die Herstellung der Salze kann dabei in der Weise erfolgen, daß man die Umsetzungsprodukte nach 1) oder 2) in einer geeigneten Konzentration, beispielsweise 10 Gewichtsprozent, in Wasser löst und die erhaltene Lösung mit einer wässrigen Lösung der vorgesehenen Säure bis zum gewünschten pH-Wert neutralisiert. Sofern die dabei erhaltenen wässrigen Lösungen der Salze nicht direkt zur Verwendung kommen, können daraus die wasserfreien Salze durch Abdampfen des Wassers erhalten werden. In bestimmten Fällen kann es zweckmäßig sein, die nach 1) oder 2) erhaltenen Umsetzungsprodukte in einem geeigneten organischen Lösungsmittel, beispielsweise Essigsäureethylester zu lösen und die erhaltene Lösung mit einer Lösung der vorgesehenen Säure in diesem Lösungsmittel zu neutralisieren. Auch hier können die Salze in Substanz durch Abdampfen des Lösungsmittels erhalten werden.

Aufgrund ihrer mikrobistatischen und mikrobiziden Wirkung gegenüber Bakterien und Pilzen eignen sich die erfindungsgemäßen Substanzen für die Lösung der verschiedenen Desinfektions- und Konservierungsaufgaben im nicht-therapeutischen Bereich. Zur Verwendung als Wirkstoff in antimikrobiellen Mitteln können die erfindungsgemäßen Substanzen in flüssige, pastenförmige oder feste Zubereitungen eingearbeitet werden. Derartige Mittel können auf den verschiedensten Gebieten zum Einsatz gelangen, beispielsweise als Reinigungs-, Desinfektions- und Konservierungsmittel für Textilien, Fußböden, Krankenhauseinrichtungen, modizinische Instrumente, Schulen, Badeanstalten, öffentliche Verkehrsmittel, gewerbliche Betriebe, wie Molkereien, Brauereien und Wäschereien.

Die fertigen antimikrobiellen Mittel enthalten neben den beschriebenen Wirkstoffen in der Regel weitere üblicherweise verwendete Bestandteile, die je nach der vorgesehenen Anwendungsform und dem Anwendungszweck ausgewählt werden. Für flüssige Zubereitungen kommen als Lösungsmittel Wasser und übliche organische Lösungsmittel, insbesondere Alkohole und Glykolether, gegebenenfalls im Gemisch mit Wasser in Betracht. Wenn neben der antimikrobiellen Wirkung eine zusätzliche Reinigungswirkung erwünscht ist, können die Mittel nichtionische Tenside oder Amphotenside enthalten. Als nichtionische Tenside kommen Anlagerungsprodukte von 4 bis 40, vorzugsweise 4 bis 20 Mol Ethylenoxid an 1 Mol Fettalkohol, Alkylcyclohexanol, Alkylphenol, Fettsäure, Fettamin, Fettsäureamid oder Alkansulfonamid in Betracht. Von besonderem Interesse sind Anlagerungsprodukte von 5 bis 16 Mol Ethylenoxid am Kokos- oder Talgfettalkohole, an Oleylalkohol sowie an Mono-, Di- oder Trialkylphenole sowie an Monoalkylcyclohexanole mit 6 bis 14 Kohlenstoffatomen in den Alkylresten. Als Amphotenside kommen die Derivate von sekundären oder tertiären aliphatischen Aminen in Frage, wobei die aliphatischen Reste geradkettig oder verzweigt sein können und ein Rest 8 bis 18 Kohlenstoffatome und ein anderer eine löslichmachende anionische Gruppe, wie zum Beispiel eine Carboxy-, Sulfo-, Sulfato, Phosphato- oder Phosphonogruppe, enthält.

In den antimikrobiellen Mitteln können auch Gerüstsubstanzen vorhanden sein; als solche eignen sich anorganische oder organische Salze, insbesondere anorganische oder organische Komplexbildner. Brauchbar sind beispielsweise Ortho-, Pyro- und Tripolyphosphate der Alkalimetalle, die Alkalisalze der komplexbildenden Aminocarbonsäuren wie Nitrilotriessigsäure und Ethylendiamintetraessigsäure, die Alkalisalze von komplexbildenden Phosphonsäuren wie 1-Hydroxyethan-1,1-diphosphonsäure, Aminotrimethylenphosphonsäure und Ethylendiamintetramethylenphosphonsäure, sowie die Alkalisalze von Sulfodicarbonsäuren, Milchsäure, Citronensäure und Weinsäure. Weiter kommen als Gerüstsubstanzen die sauren wasserlöslichen Salze höhermolekularer Polycarbonsäuren in Betracht, etwa Polymerisate der Maleinsäure, Itaconsäure, Fumarsäure und Citraconsäure. Auch Mischpolymerisate dieser Säuren untereinander oder mit anderen polymerisierbaren Stoffen, wie zum Beispiel Ethylen, Propylen, Acrylsäure, Vinylacetat, Isobutylen, Acrylamid und Styrol sind brauchbar. Wenn die antimikrobiellen Mittel organische Lösungsmitel enthalten, kann die Zugabe von Lösungsvermittlern wie Benzol-, Toluol- und Xylol-sulfonsäure in Form ihrer Alkalisalze angezeigt sein.

Der Gehalt an erfindungsgemäßen Substanzen liegt in den anwendungsfertigen antimikrobiellen Mitteln zwischen 0,01 und 5 Gewichtsprozent, bezogen auf das gesamte Mittel. Für die Herstellung solcher gebrauchsfertiger Mittel können Konzentrate oder feste Mischungen zusammengestellt werden, die bis zu 50 Gewichtsprozent Wirkstoff enthalten.

Die erfindungsgemäßen Substanzen können außerdem zur Konservierung von technischen Produkten, die zu Bakterien- und Pilzbefall oder sonstiger mikrobieller Zerstörung neigen, wie zum Beispiel Kleistern, Leimen, Dispersionsfarben sowie Schneid- und Bohrölen dienen. Für diesen Verwendungszweck ist im allgemeinen ein Zusatz von 0,01 bis 2 Gewichtsprozent, bezogen auf das zu konservierende Material, ausreichend.

## Beispiel 1

Im Verlauf von 6 Stunden wurden 501,8 g (2 Mol) Dodecyl-/Tetradecylpropylendiamin (70 Molprozent Dodecyl- und 30 Molprozent Tetradecylpropylendiamin) und 322,3 g (2 Mol) L-Glutaminsäure-5-methylester unter Rühren auf maximal 133 °C (Sumpf) erhitzt, wobei das bei 95 bis 100 °C (Sumpf) entstehende

Methanol abdestilliert wurde. Nach dem Ende der Reaktion wurden Methanolreste durch kurzzeitiges Anlegen eines schwachen Vakuums (150 bis 50 mbar) bei gleichzeitigem Rühren aus dem Reaktionsgemisch entfernt. Als Rückstand verblieben 735,8 g (97 % d. Th.) Umsetzungsprodukt aus Dodecyl/Tetradecylpropylendiamin und L-Glutaminsäure-5-methylester im Molverhältnis 1 : 1 (Substanz A) in Form einer beigen Paste vom Smp. 80-90 °C.

$C_{20,6}\ H_{42,2}\ N_3O_3$ (MM 379,99)
Analyse :
berechnet (%) : 65,12 C : 11,20 H ; 11,06 N ; 12,63 O.
gefunden (%) : 65,2 C ; 11,0 H ; 11,4 N ; 12,4 O.
IR (Film. $cm^{-1}$) : 3 150-3 500 (breit), 2 925 (s), 2 855 (s), 1 675 (s), 1 590 (m), 1 467 (w), 1 403 (w), 1 295 (w).

Beispiel 2

Analog Beispiel 1 wurden 251 g (1 Mol) Dodecyl-/Tetradecylpropylendiamin (70/30 Molprozent) mit 177 g (1,1 Mol) L-Glutaminsäure-5-methylester zur Reaktion gebracht. Das Umsetzungsprodukt aus Dodecyl-/Tetradecylpropylendiamin und L-Glutaminsäure-5-methylester im Molverhältnis 1 : 1,1 (Substanz B) wurde mit einer Ausbeute von 88 % d. Th. als beige Paste vom Smp. 96-100 °C erhalten.

Beispiel 3

In einem Kolben mit angeschlossener Destillierbrücke wurden 125,9 g (0,5 Mol) Dodecyl-/Tetradecylpropylendiamin (70/30 Molprozent) und 73,6 g (0,5 Mol) L-Glutaminsäure im Verlauf von 5 Stunden auf 175 °C (Sumpf) erhitzt. Bei 135-145 °C (Sumpf) wurde die Hauptmenge des bei der Amidbildung zu erwartenden Wassers unter starker Schaumentwicklung abgegeben. Im Verlauf der Reaktion wurden insgesamt 9 ml Wasser abdestilliert. Als Rückstand verblieben 182 g (95,8 % d. Th.) Umsetzungsprodukt aus Dodecyl-/Tetradecylpropylendiamin und L-Glutaminsäure im Molverhältnis 1 : 1 (Substanz C) als hellbeigefarbene Paste.

Beispiel 4

Ein Gemisch aus 25,1 g (0,1 Mol) Dodecyl-/Tetradecylpropylendiamin (70/30 Molprozent), 14,7 g (0,1 Mol) L-Glutaminsäure und 100 ml i-Amylalkohol als Lösungs- und Schleppmittel wurde unter Rühren am Wasserabscheider etwa 2 Stunden lang zum Rückflußkochen erhitzt, bis sich nahezu die berechnete Menge Wasser abgeschieden hatte. Die Sumpftemperatur betrug dabei maximal 146 °C. Danach wurde die Hauptmenge des i-Amylalkohols im Wasserstrahlvakuum, der Rest im Ölpumpenvakuum abdestilliert. Als Rückstand verblieben 36,1 g (95 % d. Th.) Umsetzungsprodukt aus Dodecyl-/Tetradecylpropylendiamin und L-Glutaminsäure im Molverhältnis 1 : 1 (Substanz D) in Form einer gelblichen Paste vom Smp. 72-82 °C.

$C_{20,6}\ H_{42,2}\ N_3O_3$ (MM 379,99)
Analyse :
berechnet (%) : 65,12 C ; 11,20 H ; 11,06 N ; 12,63 O.
gefunden (%) : 65,3 C ; 11,0 H ; 11,0 N ; 12,4 O.
IR (Film, $cm^{-1}$) : 3 150-3 350 (breit), 2 925 (s), 2 855 (s), 1 675 (s), 1 592 (m), 1 467 (w), 1 400 (w), 1 290 (w).

Beispiel 5

In einem Autoklaven wurden 38,0 g (0,1 Mol) Umsetzungsprodukt aus Dodecyl-/Tetradecylpropylendiamin und L-Glutaminsäure-5-methylester im Molverhältnis 1 : 1 (Substanz A aus Beispiel 1), gelöst in 100 ml Isopropanol, mit 4,4 g (0,1 Mol) Ethylenoxid im Verlauf von 2 Stunden bei 100 °C umgesetzt. Nach dem Abdestillieren des Lösungsmittels aus dem Reaktionsgemisch verblieben 42,5 g (100 % d. Th.) des entsprechenden Ethylenoxid-Adduktes (Substanz E) in Form einer klaren, gelblichen, viskosen Paste vom Erweichungspunkt 40-45 °C.

$C_{22,6}\ H_{46,2}\ N_3O_4$ (MM 424,04)
Analyse :
berechnet (%) : 64,02 C ; 10,98 H ; 9,91 N.
gefunden (%) : 64,7 C ; 11,1 H ; 9,7 N.
IR (Film, $cm^{-1}$) : 3 270 (breit), 2 930 (s), 2 860 (s), 1 685 (s), 1 599 (m), 1 466 (w), 1 400 (w), 1 290 (w).

Beispiel 6

Analog Beispiel 5 wurden 38,0 g (0,1 Mol) Umsetzungsprodukt aus Dodecyl-/Tetradecylpropylendiamin und L-Glutaminsäure-5-methylester im Molverhältnis 1 : 1 (Substanz A aus Beispiel 1) mit 8,3 g (0,2

Mol) Ethylenoxid umgesetzt. Dabei wurden 46,8 g (100 % d. Th.) des entsprechenden Ethylenoxid-Adduktes (Substanz F) in Form einer beigen Paste erhalten.

Beispiel 7

Analog Beispiel 5 wurden 38,0 g (0,1 Mol) Umsetzungsprodukt aus Dodecyl-/Tetradecylpropylendiamin und L-Glutaminsäure-5-methylester im Molverhältnis 1 : 1 (Substanz A aus Beispiel 1) mit 17,6 g (0,4 Mol) Ethylenoxid umgesetzt. Dabei wurden 48,9 g (88 % d. Th.) des entsprechenden Ethylenoxid-Adduktes (Substanz G) in Form einer braunen Flüssigkeit mit $n_D^{20}$ = 1,4917 erhalten.

Beispiel 8

Analog Beispiel 5 wurden 33,0 g (0,1 Mol) Umsetzungsprodukt aus Dodecyl-/Tetradecylpropylendiamin und L-Glutaminsäure-5-methylester im Molverhältnis 1 : 1 (Substanz A aus Beispiel 1) mit 44 g (1,0 Mol) Ethylenoxid umgesetzt. Dabei wurden 82 g (100 % d. Th.) des entsprechenden Ethylenoxid-Adduktes (Substanz H) als rotbraune Flüssigkeit mit $n_D^{20}$ = 1,4791 erhalten.

Beispiel 9

Analog Beispiel 5 wurden 38,0 g (0,1 Mol) Umsetzungsprodukt aus Dodecyl-/Tetradecylpropylendiamin und L-Glutaminsäure-5-methylester im Molverhältnis 1 : 1 (Substanz A aus Beispiel 1) mit 5,8 g (0,1 Mol) Propylenoxid umgesetzt. Dabei wurden 42,9 g (98 % d. Th.) des entsprechenden Propylenoxid-Adduktes (Substanz I) als gelbes, viskoses Öl erhalten.

Beispiel 10

Ein Gemisch aus 9,77 g (0,04 Mol) Dodecyl-/Tetradecylpropylendiamin (70/30 Molprozent) und 12,5 g (0,08 Mol) L-Glutaminsäure-5-methylester wurde unter Rühren allmählich auf 170 °C (Sumpf) erhitzt. Das bei 130-140 °C (Sumpf) entstehende Methanol wurde abdestilliert. Nach dem Ende der Reaktion wurden Methanolreste im Vakuum entfernt. Als Rückstand verblieben 14,0 g (71 % d. Th.) Umsetzungsprodukt aus Dodecyl-/Tetradecylpropylendiamin und L-Glutaminsäure-5-methylester im Molverhältnis 1 : 2 (Substanz J) in Form einer hellbeigen Paste vom Smp. 90-100 °C.

$C_{25,6}H_{49,2}N_4O_6$ (MM 509,1)

Analyse :

berechnet (%) : 60,40 C ; 9,74 H ; 11,1 N.

gefunden (%) : 60,6 C ; 9,48 H ; 11,0 N.

IR (Film in Küvette, $CHCl_3$, $cm^{-1}$) : 3 250 (breit), 2 930 (s), 2 860 (m), 1 670-1 680 (s, breit), 1 590-1 600 (m), 1 396 (w), 1 183 (m).

Beispiel 11

Ein Gemisch aus 125,9 g (0,5 Mol) Dodecyl-/Tetradecylpropylendiamin (70/30 Molprozent) und 147,1 g (1 Mol) L-Glutaminsäure wurde im Verlauf von 5 Stunden allmählich auf 175 °C (Sumpf) erhitzt. Das bei der Reaktion entstehende Wasser wurde abdestilliert. Die Hauptmenge des bei der Amidbildung zu erwartenden Wassers wurde bei 145-155 °C (Sumpf) abgegeben. Als Rückstand verblieben 240 g (94,3 % d. Th.) Umsetzungsprodukt aus Dodecyl-/Tetradecylpropylendiamin und L-Glutaminsäure im Molverhältnis 1 : 2 (Substanz K) als braune, glasartige Substanz vom Smp. 55 °C.

Beispiel 12

Ein Gemisch aus 62,7 g (0,25 Mol) Dodecyl-Tetradecylpropylendiamin (70/30 Molprozent), 73,6 g (0,5 Mol) L-Glutaminsäure und 100 ml i-Amylalkohol als Lösungs- und Schleppmittel wurde unter Rühren am Wasserabscheider etwa 2 Stunden lang zum Rückflußkochen erhitzt, bis sich die berechnete Menge Wasser abgeschieden hatte. Die Sumpftemperatur betrug dabei maximal 135 °C. Anschließend wurde die Hauptmenge des i-Amylalkohols im Wasserstrahlvakuum, der Rest im Ölpumpenvakuum abdestilliert. Als Rückstand verblieben 124,9 g (98,1 % d. Th.) Umsetzungsprodukt aus Dodecyl-/Tetradecylpropylendiamin und L-Glutaminsäure im Molverhältnis 1 : 2 (Substanz L) in Form einer gelben, glasartigen Substanz vom Smp. 90-100 °C.

Beispiel 13

Eine Lösung von 10 g Umsetzungsprodukt aus Dodecyl-/Tetradecylpropylendiamin und L-Glutaminsäure-5-methylester im Molverhältnis 1 : 1 (Substanz A aus Beispiel 1) in 30 ml Wasser wurde mit verdünnter Essigsäure auf pH 7 eingestellt. Die Lösung wurde 10 Minuten lang gerührt, dann zur

Trockene eingedampft. Als Rückstand verblieb das entsprechende Acetat (Substanz M) als beige Paste vom Smp. 65-70 °C.

Beispiel 14

Eine Lösung von 10 g Umsetzungsprodukt aus Dodecyl-/Tetradecylpropylendiamin und L-Glutaminsäure-5-methylester im Molverhältnis 1 : 1 (Substanz A aus Beispiel 1) in 30 ml Wasser wurde mit verdünnter Salzsäure auf pH 7 eingestellt. Die Lösung wurde 10 Minuten lang gerührt, dann zur Trockene eingedampft. Als Rückstand verblieb das entsprechende Hydrochlorid (Substanz N) als farbloses, hydroskopisches Salz.

Beispiel 15

Eine Lösung vom 10 g Umsetzungsprodukt aus Dodecyl-/Tetradecylpropylendiamin und L-Glutaminsäure im Molverhältnis 1 : 1 (Substanz D aus Beispiel 4) in 30 ml Wasser wurde mit verdünnter Phosphorsäure auf pH 6,5 eingestellt. Die Lösung wurde 10 Minuten lang gerührt, dann zur Trockene eingedampft. Als Rückstand verbieb das entsprechende Phosphat (Substanz O) als farbloses Salz.

Beispiel 16

Eine Lösung von 10 g Umsetzungsprodukt aus Dodecyl-/Tetradecylpropylendiamin und L-Glutaminsäure-5-methylester im Molverhältnis 1 : 1 (Substanz A aus Beispiel 1) in 100 ml Essigsäureethylester wurde mit einer 1-molaren Benzoesäurelösung in Essigsäureethylester auf pH 7 eingestellt. Beim Abdestillieren des Lösungsmittels verblieb das entsprechende Benzoat (Substanz P) als hochviskoses Öl.

Beispiel 17

Die mikrobistatische Wirksamkeit der erfindungsgemäßen Substanzen A bis P wurde gegenüber folgenden Testkeimsuspensionen bestimmt :

| | |
|---|---|
| 1. Staphylococcus aureus | $2 \times 10^9$ Keime/ml |
| 2. Escherichia coli | $2 \times 10^9$ Keime/ml |
| 3. Pseudomonas aeruginosa | $5 \times 10^8$ Keime/ml |
| 4. Candida albicans | $2 \times 10^8$ Keime/ml |
| 5. Aspergillus niger | $5 \times 10^7$ Keime/ml |
| 6. Penicillium camerunense | $5 \times 10^7$ Keime/ml |

Die Hemmkonzentrationen der zu untersuchenden Verbindungen wurden mit Hilfe des Verdünnungstestes nach den Richtlinien für die Prüfung chemischer Desinfektionsmittel der Deutschen Gesellschaft für Hygiene und Mikrobiologie (1972) ermittelt. Die Versuche wurden in sterilen Reagenzröhrchen ausgeführt, die Standard-I-Bouillon (pH 7,5 Merck) oder Würzebouillon (pH 5,5 Merck) enthielten. Nach Zugabe der Wirkstoffe betrug das Nährlösungsvolumen in den Röhrchen jeweils 5 ml. Anschließend wurden jeweils 0,1 ml der Testkeimsuspension der angegebenen Konzentration in die Röhrchen gebracht. Die mit Bakterien beimpften Nährlösungsproben wurden 3 Tage lang bei 37 °C im Brutschrank aufbewahrt. Die mit Pilzen beimpften Proben wurden 4 Tage lang bei 30 °C bebrütet. Danach wurde festgestellt, welche dem Nährmedium zugeführte Wirkstoffkonzentration das Wachstum der Keime gerade noch gehemmt hatte. Der auf diese Weise gefundene Wert wurde als Hemmkonzentration bezeichnet. Folgende Wirkstoffkonzentrationen in ppm wurden getestet : 1 000, 500, 250, 100, 50 und 10.

Für die Substanzen A bis P wurden die in der nachstehenden Tabelle I wiedergegebenen Hemmkonzentrationen ermittelt.

(Siehe Tabelle 1 Seite 8 f.)

Tabelle I

Hemmkonzentrationen (in ppm) der Substanzen A bis P im Verdünnungstest

| Substanz | Testkeim | | | | | |
|---|---|---|---|---|---|---|
| | 1 | 2 | 3 | 4 | 5 | 6 |
| A | ≤ 10 | ≤ 10 | 50 | ≤ 10 | 100 | 100 |
| B | ≤ 10 | ≤ 10 | 50 | 100 | 500 | 100 |
| C | ≤ 10 | ≤ 10 | ≤ 10 | 100 | 250 | 100 |
| D | ≤ 10 | ≤ 10 | 50 | 250 | 500 | 250 |
| E | ≤ 10 | 50 | 50 | 250 | 500 | 250 |
| F | ≤ 10 | ≤ 10 | 500 | 250 | 500 | 250 |
| G | 50 | 50 | 250 | 500 | 500 | 250 |
| H | 50 | 50 | >1000 | 1000 | 500 | 500 |
| I | ≤ 10 | ≤ 10 | 100 | 250 | 500 | 250 |
| J | ≤ 10 | 50 | 50 | 250 | 500 | 250 |
| K | 50 | 50 | 500 | 500 | 500 | 250 |
| L | ≤ 10 | ≤ 10 | ≤ 10 | 250 | 500 | 500 |
| M | ≤ 10 | ≤ 10 | ≤ 10 | 50 | 100 | 100 |
| N | ≤ 10 | ≤ 10 | ≤ 10 | 250 | 500 | 250 |
| O | ≤ 10 | 50 | 50 | 250 | 1000 | 500 |
| P | ≤ 10 | ≤ 10 | 50 | 100 | 250 | 250 |

## Beispiel 18

Die mikrobizide Wirksamkeit der erfindungsgemäßen Substanzen A bis P wurde gegenüber folgenden Testkeimsuspensionen bestimmt:

| | | |
|---|---|---|
| 1. | Staphylococcus aureus | $2 \times 10^9$ Keime/ml |
| 2. | Escherichia coli | $2 \times 10^9$ Keime/ml |
| 3. | Pseudomonas aeruginosa | $5 \times 10^8$ Keime/ml |
| 4. | Candida albicans | $2 \times 10^8$ Keime/ml |
| 5. | Aspergillus niger | $5 \times 10^7$ Keime/ml |
| 6. | Penicillium camerunense | $5 \times 10^7$ Keime/ml |

Die Abtötungszeiten der zu untersuchenden Produkte wurden mit Hilfe des Suspensionstests nach den Richtlinien für die Prüfung chemischer Desinfektionsmittel der Deutschen Gesellschaft für Hygiene und Mikrobiologie (1972) ermittelt. Die zu prüfenden Substanzen wurden zunächst in wenig Alkohol gelöst. Aus den ethanolischen Lösungen wurden durch Verdünnen mit Hartwasser einer Härte von 17° dH Testlösungen hergestellt, die 3 000 ppm und 500 ppm Wirkstoff und maximal 1 Gew.-% Ethanol enthielten. Es wurden bei Raumtemperatur jeweils 0,1 ml der Testkeimsuspension in Reangenzgläser pipettiert. Hierzu wurden jeweils 10 ml der oben beschriebenen Testlösung gegeben. Nach unterschiedlichen Einwirkungszeiten bis zu 120 Minuten bei Raumtemperatur wurde den Reangenzgläsern mit Hilfe einer Pipette 0,1 ml Material entnommen und in 10 ml Nährlösung, die 3 % Tween 80 und 0,3 % Lecithin als Enthemmer enthielt, überimpft. Das Nährmedium bestand für die Keime 1-3 aus 2,5 gew.-%iger Standard-I-Bouillon (Merck) und für die Keime 4-6 aus Würzebouillon pH 5,5 (Merck). Die Proben wurden bei 37° bzw. 30 °C bebrütet. Nach frühestens 3 Tagen wurden die Kulturen makroskopisch auf Wachstum beurteilt und auf diesem Weg die Abtötungszeiten ermittelt, die in der nachstehenden Tabelle II angegeben sind.

Tabelle II

Abtötungszeiten (in min) der Substanzen A bis P im Suspensionstest

| Substanz | Konz. (ppm) | Testkeim 1 | 2 | 3 | 4 | 5 | 6 |
|---|---|---|---|---|---|---|---|
| A | 3000 | ≤ 15 | ≤ 15 | ≤ 15 | ≤ 15 | ≤ 15 | ≤ 15 |
| | 500 | ≤ 15 | ≤ 15 | ≤ 15 | ≤ 15 | > 120 | ≤ 15 |
| B | 3000 | ≤ 15 | ≤ 15 | ≤ 15 | ≤ 15 | 60 | ≤ 15 |
| | 500 | ≤ 15 | ≤ 15 | 120 | ≤ 15 | 120 | 60 |
| C | 3000 | ≤ 15 | ≤ 15 | ≤ 15 | ≤ 15 | 60 | ≤ 15 |
| | 500 | ≤ 15 | ≤ 15 | ≤ 15 | ≤ 15 | 60 | > 120 |
| D | 2000 | ≤ 15 | ≤ 15 | ≤ 15 | ≤ 15 | 60 | ≤ 15 |
| | 500 | ≤ 15 | ≤ 15 | ≤ 15 | ≤ 15 | 60 | ≤ 15 |
| E | 3000 | ≤ 15 | ≤ 15 | ≤ 15 | ≤ 15 | > 120 | 60 |
| | 500 | 60 | ≤ 15 | 120 | 120 | > 120 | 120 |
| F | 3000 | ≤ 15 | ≤ 15 | > 120 | ≤ 15 | > 120 | > 120 |
| | 500 | ≤ 15 | 60 | - | ≤ 15 | - | - |
| G | 3000 | ≤ 15 | ≤ 15 | ≥ 120 | 60 | > 120 | > 120 |
| | 500 | 60 | > 120 | - | > 120 | - | - |
| H | 3000 | 60 | > 120 | > 120 | > 120 | > 120 | > 120 |
| | 500 | > 120 | - | - | - | - | - |
| I | 3000 | ≤ 15 | ≤ 15 | ≤ 15 | ≤ 15 | > 120 | 120 |
| | 500 | ≤ 15 | ≤ 15 | ≤ 15 | ≤ 15 | > 120 | > 120 |
| J | 3000 | 60 | ≤ 15 | ≤ 15 | 60 | > 120 | > 120 |
| | 500 | 120 | ≤ 15 | 60 | 120 | > 120 | > 120 |
| K | 3000 | 60 | > 120 | ≤ 15 | 120 | > 120 | > 120 |
| | 500 | 60 | > 120 | ≥ 120 | > 120 | > 120 | > 120 |
| L | 3000 | 60 | ≤ 15 | ≤ 15 | ≤ 15 | > 120 | > 120 |
| | 5000 | 60 | ≤ 15 | ≤ 15 | 60 | - | - |
| M | 3000 | 60 | ≤ 15 | ≤ 15 | ≤ 15 | 120 | 120 |
| | 500 | 120 | 60 | ≤ 15 | > 120 | - | - |
| N | 3000 | 60 | ≤ 15 | ≤ 15 | 60 | > 120 | > 120 |
| | 500 | 60 | ≤ 15 | ≤ 15 | 60 | > 120 | > 120 |
| O | 3000 | 60 | ≤ 15 | ≤ 15 | 60 | > 120 | > 120 |
| | 500 | 120 | ≤ 15 | ≤ 15 | 60 | > 120 | > 120 |
| P | 3000 | 120 | ≤ 15 | ≤ 15 | 60 | > 120 | > 120 |
| | 500 | 120 | ≤ 15 | ≤ 15 | 120 | > 120 | > 120 |

Beispiel 19

Die antimikrobielle Wirkung der erfindungsgemäßen Substanzen A, B, C, E, J und M bei der Flächendesinfektion wurde nach dem Scheuerdesinfektionstest ermittelt. Dieses Prüfverfahren ist den Richtlinien für die Prüfung chemischer Desinfektionsmittel, herausgegeben von der Deutschen Gesellschaft für Hygiene und Mikrobiologie (1959), entnommen. Als Modelle für kontaminierte Flächen dienten 6 × 6 cm große Stücke von lackierten Holzplatten und PVC-Fußbodenplatten. Zur Kontamination der Flächen wurden Suspensionen von Staphylococcus aureus mit $2 \times 10^9$ Keimen/ml und Candida albicans mit $5 \times 10^8$ Keimem/ml verwendet. Auf jede Testfläche wurde 0,1 ml Keimsuspension pipettiert und mit Hilfe eines Glasspatels gleichmäßig verteilt. Nach dem Antrocknen der Keimsuspension wurden die Testflächen mit Hilfe eines Wattetupfers gleichmäßig mit der Desinfektionslösung benetzt.

Zur Herstellung der Desinfektionslösungen dienten Konzentrate folgender Zusammensetzung :

10 Gew.-% Wirkstoff (Substanzen A, B, C, E, J und M)
10 Gew.-% Nonylphenol + 9,5 Mol Ethylenoxid
40 Gew.-% Ethanol
40 Gew.-% Wasser.

Diese Konzentrate wurden zur Anwendung im Verhältnis 1 : 50 mit Wasser verdünnt.

Nach Einwirkungszeiten von 1, 2, 4 und 6 Stunden wurde jeweils ein Quadrant der behandelten Flächen mit sterilen Wattetupfern abgerieben, die durch kurzes Eintauchen in Bouillon angefeuchtet waren. Die Tupfer wurden auf Bouillon-Agarplatten (Merck-Standard-I-Bouillon + 3 Gew.-% Tween 80 + 0,3 Gew.-% Lecithin + 0,1 Gew.-% Histidin) ausgestrichen. Die Agarplatten wurden 48 Stunden bei 30 °C bebrütet.

Die bei der Auswertung gefundenen Ergebnisse sind in Tabelle III wiedergegeben.

Tabelle III

Abtötungszeiten (in Stunden) der Substanzen A, B, C, E, J und M bei der Flächendesinfektion

| Substanz | pH | Staph. aureus | | Candida albicans | |
|---|---|---|---|---|---|
| | | Holz | PVC | Holz | PVC |
| A | 8,3 | 1 | 1 | 1 | 1 |
| B | 8,4 | 2 | 2 | 1 | 1 |
| C | 9,9 | 4 | 4 | 2 | 1 |
| | 10,4 | 6 | 6 | 1 | 4 |
| E | 8,4 | ++ | ++ | 2 | 4 |
| J | 7,5 | + | 6 | 4 | 1 |
| | 8,5 | ++ | ++ | 4 | 4 |
| | 9,9 | +++ | +++ | 1 | 2 |
| M | 4,8 | ++ | ++ | 2 | 2 |
| $CH_2O$ | - | 6 | 6 | 1 | 1 |

+ = < 50 Restkeime/Quadrant
++ = 50-200 Restkeime/Quadrant
+++ = > 200 Restkeime/Quadrant

Beispiel 20

Für eine orientierende Untersuchung der toxikologischen Eigenschaften der erfindungsgemäßen Substanzen wurde Substanz M aus Beispiel 15 ausgewählt.

Bei oraler Verabreichung an Mäuse war die akute Toxizität $LD_{50}$ > 3 125 mg/kg. Die Substanz wurde symptomlos vertragen.

Die Hautverträglichkeit wurde an haarlosen Maüsen getestet. Hierzu wurden 0,5 gewichtsprozentige Lösungen des Wirkstoffs an 5 aufeinanderfolgenden Tagen täglich zweimal jeweils auf die gleichen Hautstellen aufgetragen. Die behandelten Tiere zeigten keine Reaktion.

Beispiel 21

Nachstehend werden einige Zubereitungen angegeben, in die die erfindungsgemäßen Substanzen eingearbeitet sind (GT = Gewichtsteile) :

1. Schaumbad

15 GT Bis-(2-hydroxyethyl)-kokosfettaminoxid (50 Gew.-% Waschaktivsubstanz)
20 GT Kokosfettsäureamidopropyl-dimethylaminoessigsäure-betain
5 GT Kokosfettsäureethanolamid
0,5 GT Substanz A
59,5 GT Wasser

Anstelle der Substanz A können die Substanzen G, K und M mit vergleichbarem Erfolg eingearbeitet werden.

2. Deodorant-Spray

10 GT Octyldodecanol
1 GT Parfümöl
2 GT Substanz B
87 GT Ethanol
100 GT Treibgas

Anstelle der Substanz B können die Substanzen H, I, L und P mit vergleichbarer Wirkung eingesetzt werden.

3. Desinfizierende Handwaschpaste

25 GT Kokosfettsäureamidopropyl-dimethylaminoessigsäure-betain
3 GT Kokosfettsäureethanolamid
43 GT Marmormehl
2 GT Substanz D
27 GT Wasser

In dieser Rezeptur kann die Substanz D bei gleichbleibender Wirkung durch die Substanzen F und O ersetzt werden.

4. Desinfizierendes Reinigungsmittel für harte Oberflächen

13 GT $C_{10}$-$C_{12}$-Fettalkohol + 12 EO
10 GT Substanz C
5 GT Nitrilotriessigsäure, Na-Salz
10 GT Isopropanol
62 GT Wasser

Anstelle der Substanz C können die Substanzen E, J und N mit vergleichbarer Wirkung eingesetzt werden.

## Patentansprüche

1. Antimikrobiell wirksame Substanzen, erhältlich durch
   1) Umsetzung von
      a) N-substituierten Propylendiaminen der Formel I,

$$R{-}NH{-}CH_2{-}CH_2{-}CH_2{-}NH_2 \quad (I)$$

in der $R^1$ für einen linearen Alkylrest mit 12 bis 14 Kohlenstoffatomen steht, mit

b) Verbindungen der Formel II,

$$R^2 - O - CO - CH_2 - CH_2 - \underset{\displaystyle NH_2}{\underset{|}{CH}} - COOH \quad (II)$$

in der $R^2$ einen Alkylrest mit 1 bis 4 Kohlenstoffatomen oder ein Wasserstoffatom bedeutet, wobei das molare Verhältnis der Reaktionspartner a : b 1 : 1 bis 1 : 2 beträgt und die Reaktion unter Austritt von Alkohol und/oder Wasser im Verlauf von 0,5 bis 10 Stunden bei 60 bis 175 °C durchgeführt wird, und gegebenenfalls

2) weitere Umsetzung der nach 1) erhaltenen Produkte mit Ethylenoxid oder Propylenoxid unter an sich bekannten Alkoxylierungsbedingungen, sowie gegebenenfalls

3) Salzbildung der nach 1) oder 2) erhaltenen Produkte mit anorganischen oder organischen Säuren.

2. Verfahren zur Herstellung von antimikrobiell wirksamen Substanzen, bei dem man

1) a) N-substituierte Propylendiamine der Formel I

$$R^1{-}NH{-}CH_2{-}CH_2{-}CH_2{-}NH_2 \quad (I)$$

in der $R^1$ für einen linearen Alkylrest mit 12 bis 14 Kohlenstoffatomen steht, mit

b) Verbindungen der Formel II umsetzt,

$$R^2 - O - CO - CH_2 - CH_2 - \underset{\displaystyle NH_2}{\underset{|}{CH}} - COOH \quad (II)$$

in der $R^2$ einen Alkylrest mit 1 bis 4 Kohlenstoffatomen oder ein Wasserstoffatom bedeutet, wobei das molare Verhältnis der Reaktionspartner a : b 1 : 1 bis 1 : 2 beträgt und die Reaktion unter Austritt von Alkohol und/oder Wasser im Verlauf von 0,5 bis 10 Stunden bei 60 bis 175 °C durchgeführt, und gegebenenfalls

2) die nach 1) erhaltenen Produkte mit Ethylenoxid oder Propylenoxid unter an sich bekannten Alkoxylierungsbedingungen umsetzt, sowie gegebenenfalls

3) die nach 1) oder 2) erhaltenen Produkte mit anorganischen oder organischen Säuren zu den entsprechenden Salzen umsetzt.

3. Verwendung der Substanzen nach den Ansprüchen 1 und 2 als antimikrobielle Wirkstoffe.

## Claims

1. Antimicrobial agents obtainable by

1) reacting

a) N-substituted propylene diamines corresponding to the following formula

$$R^1{-}NH{-}CH_2{-}CH_2{-}CH_2{-}NH_2 \quad (I)$$

in which $R^1$ represents a linear alkyl radical containing from 12 to 14 carbon atoms, with

b) compounds corresponding to the following formula

$$R^2 - O - CO - CH_2 - CH_2 - \underset{\displaystyle NH_2}{\underset{|}{CH}} - COOH \quad (II)$$

in which $R^2$ is an alkyl radical containing from 1 to 4 carbon atoms or a hydrogen atom, the molar ratio between the reactants a and b amounting to between 1 : 1 and 1 : 2 and the reaction, which is accompanied by the elimination of alcohol and/or water, being carried out over a period of 0.5 to 10 hours at 60 to 175 °C, and optionally

2) further reaction the products obtained in step 1) with ethylene oxide or propylene oxide under alkoxylation conditions known per se, and optionally

3) subjecting the products obtained in step 1) or 2) to salt formation with inorganic or organic acids.

2. A process for producing antimicrobial agents in which

1) a) N-substituted propylene diamines corresponding to the following formula

$$R^1\text{—NH—}CH_2\text{—}CH_2\text{—}CH_2\text{—}NH_2 \qquad (I)$$

in which $R^1$ is a linear alkyl radical containing from 12 to 14 carbon atoms are reacted with

b) compounds corresponding to the following formula

$$R^2 - O - CO - CH_2 - CH_2 - \underset{\displaystyle NH_2}{\underset{|}{CH}} - COOH \qquad (II)$$

in which $R^2$ is an alkyl radical containing from 1 to 4 carbon atoms or a hydrogen atom, the molar ratio between reactants a) and b) amounting to between 1 : 1 and 1 : 2 and the reaction, which is accompanied by the elimination of alcohol and/or water, being carried out over a period of 0.5 to 10 hours at 60 to 175 °C, and

2) the products obtained in step 1) are optionally reacted with ethylene oxide or propylene oxide under alkoxylation conditions known per se and

3) the products obtained in step 1) or 2) are reacted with inorganic or organic acids to form the corresponding salts.

3. The use of the substances claimed in Claims 1 and 2 as antimicrobial agents.

## Revendications

1. Substances actives anti-microbiennes susceptibles d'être obtenues par

1) condensation de

a) propylènediamines N-substituées de formule I

$$R^1\text{—NH—}CH_2\text{—}CH_2\text{—}CH_2\text{—}NH_2 \qquad (I)$$

dans laquelle $R^1$ représente un radical alcoyle linéaire ayant de 12 à 14 atomes de carbone avec b) des composés de formule II

$$R^2 - O - CO - CH_2 - CH_2 - \underset{\displaystyle NH_2}{\underset{|}{CH}} - COOH \qquad (II)$$

dans laquelle $R^2$ signifie un radical alcoyle ayant de 1 à 4 atomes de carbone ou un hydrogène, pour lequel le rapport molaire des partenaires de la réaction a : b s'élève de 1 : 1 à 1 : 2 et la réaction est effectuée avec élimination d'alcool et/ou d'eau pendant une durée de 0,5 à 10 heures à une température allant de 60 à 175 °C et le cas échéant

2) une concentration ultérieure des produits obtenus selon 1) avec l'oxyde d'éthylène ou de propylène dans les conditions connues en alcoxylation, ainsi que le cas échéant,

3) la formation de sel des composés obtenus selon 1) ou 2) avec des acides minéraux ou organiques.

2. Procédé d'obtention des substances actives anti-microbiennes dans lequel on condense

1) a) des propylènediamines N-substituées de formule I

$$R^1\text{—NH—}CH_2\text{—}CH_2\text{—}CH_2\text{—}NH_2 \qquad (I)$$

dans laquelle $R^1$ représente un radical alcoyle linéaire ayant de 12 à 14 atomes de carbone, avec

b) des composés de formule II

$$R^2 - O - CO - CH_2 - CH_2 - \underset{\displaystyle NH_2}{\underset{|}{CH}} - COOH \qquad (II)$$

dans laquelle $R^2$ signifie un radical alcoyle ayant de 1 à 4 atomes de carbone ou un atome d'hydrogène, condensation pour laquelle le rapport molaire des partenaires de la réaction a : b s'élève de 1 : 1 à 1 : 2 et la réaction s'effectue avec départ d'alcool et/ou d'eau au cours d'une période de 0,5 à 10 heures à une température allant de 60 à 175 °C et le cas échéant

2) on condense les produits obtenus selon 1) avec l'oxyde d'éthylène ou de propylène dans les conditions connues en soi d'alcoxylation, ainsi que le cas échéant

3) l'on condense les produits obtenus selon 1) ou 2) avec des acides minéraux ou organiques en vue des sels correspondants.

3. Utilisation des substances selon les revendications 1 et 2 comme principes actifs anti-microbiens.